# FASCICULE DE BREVET EUROPEEN

(11) **EP 1 419 077 B1**
(45) Date de publication et mention de la délivrance du brevet: **22.11.2006**
(21) Numéro de dépôt: 02794612.8
(22) Date de dépôt: 30.07.2002
(51) Int. Cl.: B60T 11/232

(54) **CIRCUIT HYDRAULIQUE DE FREINAGE ET SON UTILISATION.**
HYDRAULISCHER BREMSKREIS UND SEINE VERWENDUNG
HYDRAULIC BRAKING CIRCUIT AND ITS USE

(30) Priorité: 08.08.2001 FR 0110619
(43) Date de publication de la demande: 19.05.2004
(73) Titulaire: ROBERT BOSCH GMBH, 70442 Stuttgart (DE)
(72) Inventeur: VERBO, Ulysse, F-93600 AULNAY-SOUS-BOIS (FR); ATTARD, Jean-Marc, F-60500 CHANTILLY (FR); PIEL, Jean-Marc, F-93700 DRANCY (FR)
(74) Mandataire: Hurwic, Aleksander Wiktor
(86) Numéro de dépôt international: PCT/FR2002/002729
(87) Numéro de publication internationale: WO 2003/013924

(56) Documents cités:
- US-A- 5 971 500
- US-A- 6 082 509

## Description

US-A-6082 509 décrit un frein de moto comportant un premier circuit d'alimentation des pistons de frein en liquide de frein sous pression et un second circuit de retour de fluide vers le maître-cylindre.

La présente invention concerne un circuit hydraulique de freinage associé à un dispositif permettant de réduire la course morte d'un véhicule au cours d'un freinage, notamment lors de l'appui d'un pied d'un conducteur sur une pédale de frein. Elle concerne également son utilisation. L'invention vise ainsi à améliorer le tout début de la phase de freinage d'un véhicule en rendant plus efficace et moins fatigant l'appui du pied du conducteur sur la pédale de frein du véhicule.

Lorsqu'un conducteur appuie, avec son pied, sur une pédale de frein d'un véhicule, une tige de commande reliée à cette pédale de frein déplace au moins un piston d'un maître cylindre d'un circuit hydraulique de freinage. Le piston comprime un volume de liquide hydraulique contenu dans au moins une chambre du maître cylindre. II résulte de cette compression une pression de liquide hydraulique à la sortie du maître cylindre.

La pression hydraulique entraîne le déplacement du liquide hydraulique dans les différents conduits du circuit hydraulique de freinage. Cette pression hydraulique permet de freiner au moins une roue du véhicule. Par exemple, ce liquide hydraulique, par sa pression, peut comprimer des patins de frein contre des disques de frein fixés à un moyeu d'au moins une roue du véhicule.

A la fin d'un freinage, une partie du liquide hydraulique présent dans les conduits du circuit hydraulique de freinage retourne vers le maître cylindre. Ce retour du liquide hydraulique vers le maître cylindre s'effectue par relâchement de la pression dans le maître cylindre, et du fait des différents efforts de rappel exercés sur les éléments du circuit. Pour le reste, le liquide stagne dans les conduits du circuit hydraulique de freinage.

Ainsi, lors des tous premiers stades du freinage suivant, avant d'agir directement sur le mécanisme de freinage proprement dit, le déplacement du liquide hydraulique sortant du maître cylindre doit rattraper toute la course morte, notamment le déplacement du liquide hydraulique doit servir à plaquer les patins de frein contre les disques de frein. Le liquide hydraulique doit aussi rattraper les jeux du circuit hydraulique résultant des ouvertures ou des fermetures de certains clapets anti-retour de ce circuit hydraulique. La période pendant laquelle le liquide hydraulique doit rattraper les jeux du circuit correspond à la durée de rattrapage de la course morte de la pédale de frein. La course morte d'une pédale de frein est, en pratique, la distance que doit parcourir une pédale de frein avant que son action n'entraîne le freinage du véhicule. La période de la course morte retarde le freinage d'une manière jugée inacceptable dans certains cas.

Ainsi, classiquement, lors des tous premiers stades du freinage, le débit à la sortie du maître cylindre comprend le débit hydraulique réel servant à freiner le véhicule et, préalablement, un débit hydraulique de perte servant, entre autres, à rattraper les jeux du circuit hydraulique de freinage. Ce débit hydraulique de perte résulte, en quelque sorte, d'une absorption du circuit hydraulique de freinage.

Il est dans l'intérêt du conducteur, pour une plus grande sécurité, que le débit à la sortie du maître cylindre soit le plus efficace possible. L'efficacité d'un tel débit résiderait dans un débit servant uniquement à freiner le véhicule. Pour cela, on pourrait diminuer l'absorption du circuit hydraulique et diminuer le temps de réaction du circuit hydraulique. Cependant ce travail serait complexe et ne résoudrait pas le problème d'usure des pièces du circuit hydraulique au cours du temps et de leur utilisation. La réalisation d'une telle solution serait de toute façon coûteuse.

Actuellement, pour réduire l'absorption pendant la phase de freinage on utilise un dispositif mécanique utilisé entre le servomoteur et le maître cylindre. Un tel dispositif ne permet cependant pas de réduire toute l'absorption.

Pour réduire l'absorption dans le circuit hydraulique, l'invention prévoit de mettre en place un dispositif hydraulique situé à la sortie du maître cylindre. Ce dispositif hydraulique permet de rattraper ces jeux du circuit hydraulique de freinage. Ce dispositif hydraulique est situé de préférence en aval et à proximité du maître cylindre et fonctionne au tout début de la phase de freinage, lors des tous premiers millimètres de course. Par ce dispositif hydraulique, le débit hydraulique à la sortie du maître cylindre peut être davantage utilisé pour freiner le véhicule.

Avec ce dispositif hydraulique, l'invention consiste à gaver les conduits du circuit hydraulique de freinage par du liquide hydraulique, au tout début de la phase de freinage, de façon à réduire la phase d'absorption. Cette réduction de la phase d'absorption est réalisée de telle manière qu'une légère pression soit obtenue à la sortie du maître cylindre dans le circuit hydraulique, avant que le débit sortant du maître cylindre n'entraîne le freinage du véhicule.

Selon l'invention, le liquide destiné à gaver les conduits du circuit hydraulique de freinage provient d'une autre source que celle provenant du réservoir de liquide hydraulique, lequel est situé habituellement au-dessus du maître cylindre. Ce liquide provient d'une chambre qui comporte la particularité de contenir du liquide hydraulique sous une certaine pression. Cette mise sous pression du liquide permet d'injecter le liquide dans le circuit de telle sorte que le circuit est placé sous une légère pression avant le freinage réel du véhicule. La chambre doit contenir un volume de liquide hydraulique sous pression tel que ce volume permette de rattraper les jeux du circuit.

Selon l'invention, au tout début de la phase de freinage, le déplacement de la pédale de frein est détecté par un capteur de déplacement de la pédale de frein. Ce capteur agit indirectement sur la chambre et entraîne son ouverture. Trois cas peuvent alors se présenter.

Dans le premier cas, l'ouverture de la chambre est suivie de l'injection du liquide dans le circuit hydraulique de freinage, afin de gaver le circuit au tout début de la phase de freinage. La chambre est à nouveau remplie au cours d'une phase de défreinage ultérieure, en particulier en déconnectant temporairement le maître cylindre du circuit hydraulique de freinage le temps du remplissage de la chambre.

Dans le second cas, l'injection s'effectue comme pour le premier cas. Par contre le remplissage de la chambre se produit lors de la suite du freinage. Des détecteurs installés sur la pédale de frein peuvent permettre de gérer ce remplissage. La mise en oeuvre est alors plus simple et moins coûteuse. Il en résulte toutefois une diminution temporaire de la pression disponible, lors du freinage, à l'endroit où se situe les freins.

Dans le troisième cas, l'ouverture de la chambre suite au déplacement de la pédale de frein n'est pas suivie de son remplissage immédiat. Le remplissage en liquide hydraulique dans la chambre est effectué lors de l'arrêt et/ou pendant l'avance du véhicule. Ce remplissage s'effectue par une dérivation du maître cylindre dans le circuit hydraulique de freinage.

L'invention a donc pour objet un circuit hydraulique de freinage d'un véhicule comportant un capteur de déplacement d'une pédale de frein caractérisé en ce qu'il comporte des moyens pour déclencher une injection, dans le circuit, d'un volume de liquide hydraulique correspondant à une quantité de liquide nécessaire pour gaver des conduits du circuit.

L'invention a également pour objet l'utilisation d'un circuit hydraulique de freinage d'un véhicule comportant une étape dans laquelle
- on appuie sur une pédale de frein,
   caractérisée en ce qu'elle comporte une étape dans laquelle
- on met en service des moyens de gaver le circuit hydraulique pendant un début de freinage.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un circuit hydraulique de freinage muni, selon l'invention, d'un dispositif créant, au préalable d'un freinage, une légère surpression dans le circuit hydraulique ;
- Figures 2a à 2f : des représentations graphiques de l'enchevêtrement dans le temps des événements aboutissant au gavage du circuit hydraulique de freinage, au tout début de la phase de freinage du véhicule, suite à la mise en marche du dispositif selon l'invention.

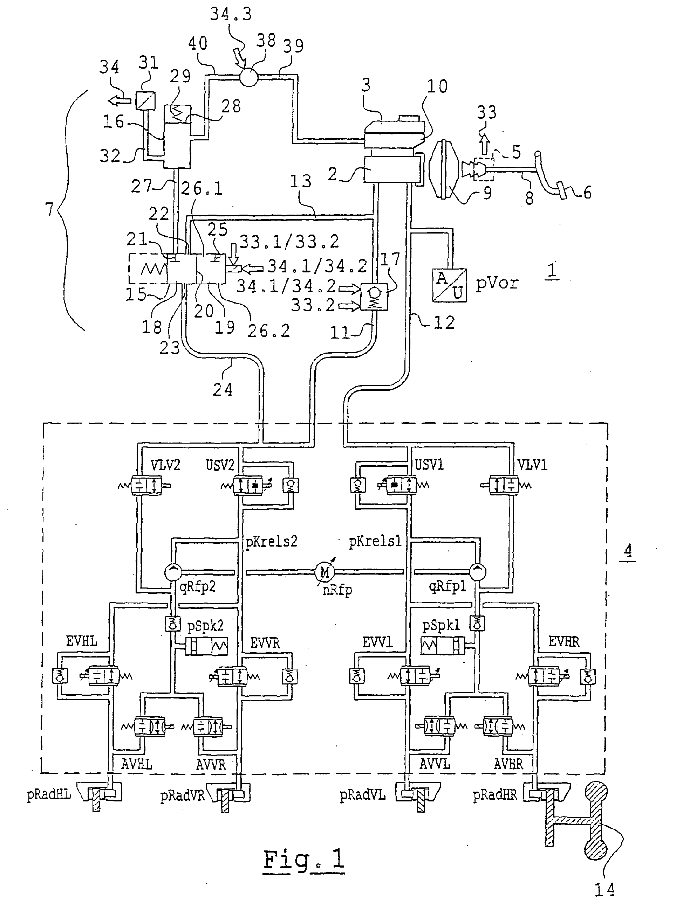

La figure 1 montre un circuit hydraulique de freinage 1 selon l'invention. Le circuit 1 comporte un maître cylindre 2, un réservoir 3 de liquide hydraulique, un dispositif 4 de freinage, et selon l'invention un capteur 5 de mesure du déplacement d'une pédale 6 de frein. Le capteur 5 est relié à un dispositif 7 permettant de créer une légère pression dans le circuit hydraulique de freinage 1. Le capteur 5 et le dispositif 7 sont un exemple des moyens permettant de déclencher une injection dans le circuit 1.

La pédale 6 de frein est reliée à une tige de commande 8. Cette tige de commande 8 est elle-même reliée, de préférence, à un organe d'assistance, comme par exemple, un servomoteur 9. Le servomoteur 9 est lui-même mécaniquement relié au maître cylindre 2. Ce maître cylindre 2 est alimenté en liquide hydraulique 10 par le réservoir 3 de liquide hydraulique situé au-dessus du maître cylindre 2. Du maître cylindre 2, deux conduits 11 et 12 sortent pour alimenter le dispositif 4 de freinage. Une dérivation 13 est prise sur le conduit 11. Le dispositif 4 de freinage comporte un ensemble de conduits représenté très schématiquement par l'encadrement en pointillés. Cet ensemble de conduits aboutit à au moins une roue 14 du véhicule.

Selon l'invention, le circuit hydraulique de freinage 1 comporte le dispositif 7 permettant de créer une légère pression dans le circuit hydraulique de freinage 1, avant le freinage du véhicule. Ce dispositif 7 est ici situé en aval du maître cylindre 2 et est branché sur le conduit 11 par la dérivation 13. Dans un exemple, ce dispositif 7 peut être situé au plus près possible du maître cylindre 2, de façon à gaver le plus de conduits possibles du circuit 1 à partir du maître cylindre 2. De cette manière, le circuit peut être gavé dès la sortie du maître cylindre 2 et le débit sortant du maître cylindre 2 au moment du freinage du véhicule, peut servir pleinement au freinage des patins sur le disque d'au moins une roue 14 du véhicule.

Le dispositif 7 comporte, dans l'exemple, un tiroir compartimenté formant une électrovanne 15, une chambre 16 contenant du liquide hydraulique 10 sous pression, et de préférence une vanne 17 à la sortie du maître cylindre 2, en aval de la prise de dérivation 13 sur le conduit 11. La vanne 17 peut être, par exemple, un clapet anti-retour.

L'électrovanne 15 est une vanne trois voies. Elle comporte plusieurs compartiments. Dans un exemple, l'électrovanne 15 comporte un tiroir à deux compartiments 18 et 19 séparés par une cloison 20. Le compartiment 18 comporte un clapet 21 fermé et un orifice 22. L'orifice 22 est prévu pour venir en regard de la dérivation 13. Le compartiment 18 permet le passage du liquide hydraulique 10 sortant du maître cylindre 2. Le compartiment 18 comporte, dans ce but, un deuxième orifice 23 relié au dispositif 4 de freinage par un autre conduit 24. Le deuxième compartiment 19 comporte un deuxième clapet 25 fermé et deux orifices 26.1 et 26.2. Les deux orifices 26.1 et 26.2 débouchent dans le compartiment 19, permettant à l'électrovanne 15, lorsqu'elle est avancée (position en pointillées), de former un passage entre la chambre 16 contenant du liquide hydraulique et débouchant par un conduit 27 et le dispositif 4 de freinage par l'intermédiaire du conduit 24.

La chambre 16 est un récipient contenant du liquide hydraulique 10 sous pression. Ce liquide 10 est mis sous pression par l'intermédiaire d'un piston artificiel confectionné en suspendant une plaque 28 à un ressort 29. Le ressort 29 est en réaction, par ailleurs, contre une paroi interne de la chambre 16. Le ressort 29 peut être dans deux situations différentes. Ce ressort 29 peut être étendu et peut servir à expulser le liquide. Dans cette situation, le ressort 29 aide le liquide à sortir de la chambre 16 en exerçant une pression par l'intermédiaire de la plaque 28. La chambre 16 est alors en situation où elle se vide. Le ressort 29 peut également être comprimé par l'appui sur la plaque 28 du liquide 10 contenu dans cette chambre 16. La chambre 16 est alors en situation où elle est remplie. Un capteur 31 de dépression est relié à la chambre 16 par un conduit 32. Il permet de mesurer la pression dans la chambre 16 et d'établir en correspondance les conditions de commande de l'électrovanne 15 et, de préférence, aussi de la vanne 17.

Pour permettre le remplissage de la chambre 16 au moment d'un freinage, au repos ou pendant la course du véhicule, la vanne 17 est installée sur le conduit de sortie 11 du maître cylindre 2. Cette vanne 17 peut être un clapet anti-retour empêchant le liquide de retourner vers le maître cylindre 2. Cette vanne 17 peut être commandée en fonction d'un signal 33 ou d'un signal 34 fournis respectivement par le capteur 5 de déplacement de la pédale de frein, ou par le capteur 31 de dépression. Ces signaux 33 et 34 sont traités par un organe de commande non représenté (mais de facture classique) et sont transformés en des ordres 33.1 et 34.1 respectivement adressés à l'électrovanne 15 et à la vanne 17 pour fermer le conduit 11. Ainsi, le liquide hydraulique 10 peut se diriger vers la chambre 16 du dispositif 7 afin d'y effectuer le remplissage de cette chambre 16.

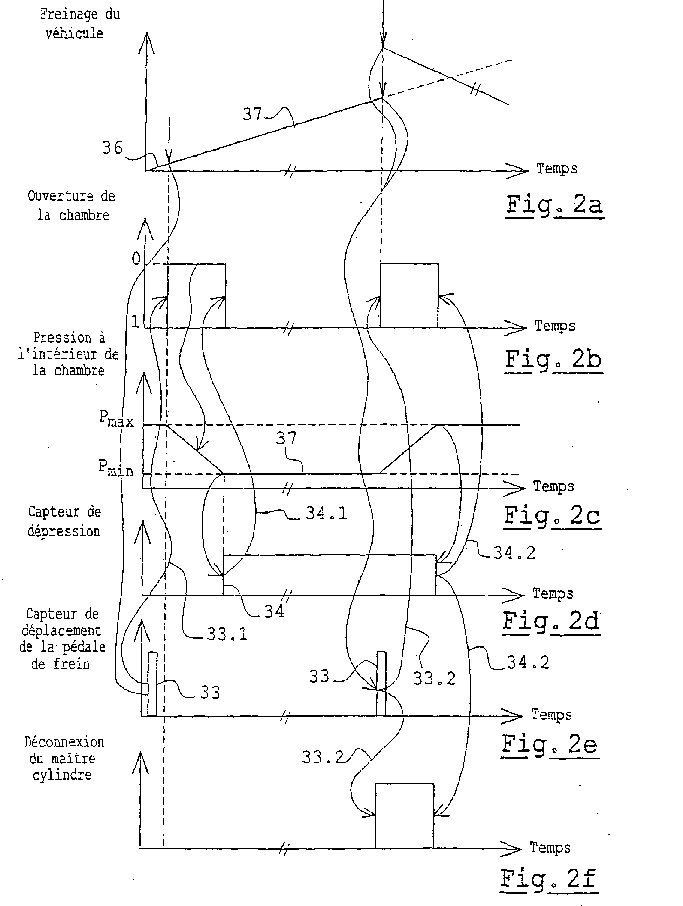

Le fonctionnement du dispositif 7 associé au capteur 5 de déplacement de la pédale 6 de frein est décrit sur les figures 2a à 2f. Ces figures représentent respectivement le freinage du véhicule, l'ouverture de la chambre 16, la valeur de la pression régnant à l'intérieur de la chambre 16, le signal 34 délivré par le capteur de dépression 31, le signal 33 délivré par le capteur 5 de déplacement de la pédale de frein, et dans une variante une déconnexion temporaire du maître cylindre. On s'intéresse d'abord au cas où la chambre se vide pour gaver le circuit, préalablement au freinage proprement dit du véhicule, et où la chambre se remplit au défreinage.

La figure 2a montre, en fonction du temps (comme toutes les autres), l'évolution de la position de la pédale 6 au moment du freinage. Lors des tous premiers millimètres de course de la pédale 6, repère 36, la pression Pmax (figure 2c) régnant à l'intérieur de la chambre 16 est à son maximum. Le capteur 5 de déplacement de la pédale 6 de frein, figure 2e, indique par un signal 33 converti en un ordre 33.1 d'avoir à commuter l'électrovanne 15 pour ouvrir la chambre 16, figure 2b. L'électrovanne 15 se déplace alors pour connecter la chambre 16 au dispositif 4 de freinage par l'intermédiaire du compartiment 19.

L'électrovanne 15 s'est déplacé pour dégager le clapet 21 du conduit 27 de telle manière que le conduit 27, débouchant initialement dans le compartiment 18 se retrouve dorénavant en regard du compartiment 19. Par ce compartiment 19, le conduit 27 est directement relié au conduit 24. Par ce conduit 24, le liquide contenu dans la chambre 16 peut être injecté et gaver le circuit 4 hydraulique de freinage. Le conduit 13 relié au maître cylindre 2 est fermé par le clapet 25. Cette fermeture du conduit 13 permet ainsi de déconnecter le maître cylindre 2 du dispositif 7.

Au fur et à mesure que la chambre 16 se vide, la pression régnant à l'intérieur de la chambre 16 diminue, figure 2c. Elle diminue jusqu'à un niveau de pression Pmin correspondant à un volume de liquide nécessaire pour éliminer les jeux du circuit 1 hydraulique de freinage. La pression Pmin est en même temps celle qui règne dans le circuit 1 sous l'effet du freinage imposé par la pédale 6. A ce moment là, le capteur 31 de dépression, figure 2d, indique à l'électrovanne 15, par un signal 34 converti en un ordre 34.1 d'avoir à refermer la chambre 16 figure 2b. L'électrovanne 15 se déplace alors de telle manière que le clapet 21 vienne se placer à l'endroit où se situe le conduit 27. Le liquide provenant du maître cylindre 2 peut alors s'écouler à travers le compartiment 18 jusque dans le dispositif 4 de freinage.

La mise en place de ce mécanisme est telle que le débit sortant du maître cylindre 2 est ainsi secondé par le gavage du circuit 1. Pendant toute la durée suivante 37 du freinage, figure 2c, le capteur 31 de dépression de la chambre 16 détecte la pression Pmin dans la chambre 16.

Pour que le dispositif 7 puisse fonctionner au freinage suivant, la chambre 16 doit être à nouveau remplie. Pour cela, l'invention est réalisée de telle manière qu'elle puisse mettre à profit les conséquences du freinage lors du défreinage. En effet, une des conséquences du freinage est, entre autres, le retour vers le maître cylindre 2 du liquide hydraulique lors du défreinage par relâchement de la pression dans le maître cylindre 2.

L'invention prévoit dans ce cas de bloquer le retour du liquide vers le maître cylindre 2 au profit du remplissage de la chambre 16 par le conduit 24. Le blocage du retour de ce liquide peut s'effectuer par l'action de la vanne 17 fonctionnant comme un clapet. Ou bien la vanne 17 peut être commandée, en même temps que l'électrovanne 15, par un ordre 33.2 résultant de l'évolution du signal 33, voir figures 2b, 2e et 2f, ou par un ordre résultant de la mesure de la dépression (signal 34). Au fur et à mesure que la chambre 16 se remplit en liquide, la pression à l'intérieur de la chambre 16 augmente, figure 2c. Lorsque la chambre 16 est remplie à au moins un volume de liquide nécessaire pour rattraper les jeux du circuit 1 et correspondant à la pression Pmax, le capteur de dépression 31 indique par un signal 34 converti en un ordre 34.2 à l'électrovanne 15 de se déplacer afin de fermer le conduit 27 de la chambre 16, figure 2b, et à la vanne 17 de redevenir passante.

La mise en marche du dispositif 7, dans le cas où la chambre 16 se remplit pendant la fin du freinage du véhicule, est décrite également dans les figures 2a à 2f. Au cours du freinage d'un véhicule, le conducteur appuie de plus en plus fort sur la pédale 6 de frein pour aboutir à un freinage de plus en plus fort du véhicule (droite en pointillée en continuité avec la droite en trait plein, figure 2a). Au cours de cet appui plus fort, la chambre 16 est remplie à nouveau. Ce remplissage peut être déclenché par un déplacement de la pédale 6 de frein mesuré par le capteur 5 de déplacement de la pédale 6 de frein. Ce capteur 5 envoie un signal 33 converti en un ordre 33.2, comme pour le défreinage, mais pour un freinage plus fort dans ce cas, pour mettre en communication la chambre 16 avec le dispositif 4 de freinage, mais pas pour fermer la vanne 17 dans ce cas. Il s'ensuit les mêmes événements que pour le premier cas précédemment décrit où le remplissage de la chambre s'effectuerait pendant le défreinage.

Dans le troisième cas, où le remplissage de la chambre 16 peut s'effectuer indépendamment du freinage, pendant l'arrêt ou pendant la marche du véhicule, le dispositif 7 peut être muni d'une pompe hydraulique 38 complémentaire, figure 1. La pompe 38 est branchée en dérivation du maître cylindre 2 entre le réservoir 3, par un conduit 39, et la chambre 16, par un conduit 40. Ainsi, la pompe 38 peut être mise en marche par un signal 34 provenant du capteur 31 de mesure de pression dans la chambre 16 converti en un ordre 34.3. La pompe hydraulique 38 puise du liquide hydraulique directement dans le réservoir hydraulique 3 par le conduit 39. Puis, la pompe 38 remplit la chambre 16 par le conduit 40 pendant l'arrêt ou pendant la marche du véhicule. Dans ce dernier cas, le remplissage de la chambre 16 ne provoque aucune modification du circuit de freinage.

## Revendications

1. Circuit hydraulique (1) de freinage d'un véhicule comportant un maître-cylindre (2), un réservoir de liquide hydraulique, des conduits (4) de freinage, un capteur (5) de déplacement d'une pédale (6) de frein actionnant ledit maître-cylindre et des moyens pour déclencher une injection, dans le circuit, d'un volume de liquide hydraulique correspondant à une quantité de liquide nécessaire pour gaver des conduits du circuit lors de la détection par le capteur du déplacement de la pédale de frein **caractérisé en ce que** les moyens d'injection (7) comportent
- une chambre (16) servant de réservoir supplémentaire de liquide hydraulique, et contenant un volume de liquide hydraulique correspondant à une quantité de liquide nécessaire pour gaver les conduits du circuit.

2. Circuit (1) selon la revendication 1, **caractérisé en ce que** les moyens d'injection (7) sont situés en aval du maître cylindre (2) par rapport au réservoir (3), au plus près possible du maître cylindre (2).

3. Circuit (1) selon l'une des revendications 1 ou 2, **caractérisé en ce que** les moyens d'injection comportent
- une électrovanne (15) reliée à la chambre, au maître cylindre (2) et aux conduits de freinage, de préférence sous la forme d'un tiroir compartimenté,
- un dispositif de commande pour régler, dans le temps, l'ouverture et/ou la fermeture de l'électrovanne, et de préférence
- une vanne (17) présente à la sortie d'un maître cylindre (2).

4. Circuit (1) selon la revendication 1,2 ou 3, **caractérisé en ce que** la chambre (16) comporte un capteur (31) de dépression.

5. Circuit (1) selon l'une des revendications 3 à 4, **caractérisé en ce que** l'électrovanne (15) comporte
- deux orifices (26.1 et 26.2) permettant le passage du liquide hydraulique (10) entre la chambre (16) et le dispositif de freinage (4), et
- deux orifices (22 et 23) permettant le passage du liquide hydraulique (10) entre le maître cylindre (2) et le dispositif (4) de freinage.

6. Utilisation d'un circuit (1) hydraulique de freinage d'un véhicule comportant une étape dans laquelle
- on appuie sur une pédale (6) de frein,
**caractérisée en ce qu'**elle comporte une étape dans laquelle
- on met en service des moyens (7) de gaver le circuit (1) hydraulique pendant un début de freinage.

7. Utilisation selon la revendication 6, **caractérisée en ce que**
- on remplit des moyens de gavage pendant un défreinage du véhicule.

8. Utilisation selon l'une des revendications 6 à 7, **caractérisée en ce que**
- on remplit des moyens de gavage pendant un freinage du véhicule.

9. Utilisation selon l'une des revendications 6 à 8, **caractérisée en ce que**
- on remplit des moyens de gavage pendant un arrêt ou un déplacement du véhicule.

## Claims

1. Hydraulic braking circuit (1) of a vehicle comprising a master cylinder (2), a hydraulic-fluid tank (3), brake-fluid pipes (4), a travel sensor (5) for a brake pedal (6) actuating said master cylinder, and means for starting an injection, into the circuit, of a hydraulic fluid volume corresponding to a quantity of fluid required for the gorging of the pipes of the circuit, on the detection of the travel of the brake pedal by the sensor, **characterised in that** the injection means (7) comprise:
- a chamber (16), serving as an auxiliary hydraulic-fluid tank and containing a hydraulic fluid volume corresponding to a quantity of fluid required for the gorging of the pipes of the circuit.

2. Circuit (1) according to claim 1, **characterised in that** the injection means (7) are positioned downstream from the master cylinder (2) in relation to the tank (3), and as close as possible to the master cylinder (2).

3. Circuit (1) according to claim 1 or claim 2, **characterised in that** the injection means (7) comprise :
- a solenoid valve (15), preferably in the form of a partitioned slide valve, connected to the chamber, to the master cylinder (2) and to the brake-fluid pipes ;
- a control device for the time adjustment of the opening and/or closing operations of the solenoid valve, and preferably
- a valve (17) disposed at the outlet of the master cylinder (2).

4. Circuit (1) according to claim 1, 2 or 3, **characterised in that** the chamber (16) comprises a negative-pressure sensor (31).

5. Circuit (1) according to claim 3 or claim 4, **characterised in that** the solenoid valve (15) comprises:
- two ports (26.1 and 26.2) for the passage of the hydraulic fluid (10) from the chamber (16) into the braking device (4) ; and
- two ports (22 and 23) for the passage of the hydraulic fluid (10) from the master cylinder (2) into the braking device (4).

6. Use of a hydraulic braking circuit (1) of a vehicle, including a phase in which
- the brake pedal (6) is depressed,
**characterised in that** it includes a phase in which
- means (7) are actuated so as to gorge the hydraulic circuit (1), at the beginning of a braking operation.

7. Use according to claim 6, **characterised in that** :
- gorging means are filled up in the course of a brake-releasing stage.

8. Use according to claim 6 or claim 7, **characterised in that** :
- gorging means are filled up in the course of a braking process.

9. Use according to any one of claims 6 to 8, **characterised in that** :
- gorging means are filled up when the vehicle is stopped or travelling.

## Patentansprüche

1. Hydraulikkreis (1) zum Bremsen eines Fahrzeugs, mit einem Hauptzylinder (2), einem Hydraulikflüssigkeitsbehälter, Bremsleitungen (4), einem Sensor (5) zur Erfassung der Verlagerung eines Bremspedals (6), das den Hauptzylinder betätigt, und mit Mitteln zum Auslösen einer Einspritzung eines Hydraulikflüssigkeitsvolumens in den Kreis, welches einer Flüssigkeitsmenge entspricht, die zum Füllen von Leitungen des Kreises erforderlich ist, wenn der Sensor die Verlagerung des Bremspedals erfasst, **dadurch gekennzeichnet, dass** die Einspritzmittel (7) folgendes aufweisen:
- eine Kammer (16), die als zusätzlicher Hydraulikflüssigkeitsbehälter dient und ein Hydraulikflüssigkeitsvolumen enthält, das einer Flüssigkeitsmenge entspricht, die zum Füllen der Leitungen des Kreises erforderlich ist.

2. Kreis (1) nach Anspruch 1, **dadurch gekennzeichnet, dass** die Einspritzmittel (7) in Bezug auf den Behälter (3) stromabwärts des Hauptzylinders (2) und so nah wie möglich an diesem angeordnet sind.

3. Kreis (1) nach Anspruch 1 oder 2, **dadurch gekennzeichnet, dass** die Einspritzmittel folgendes aufweisen:
- ein Magnetventil (15), das mit der Kammer, mit dem Hauptzylinder (2) und mit den Bremsleitungen verbunden und vorzugsweise als aufgegliederter Schieber ausgebildet ist,
- eine Steuervorrichtung, um im Zeitverlauf das Öffnen und/oder Schließen des Magnetventils einzustellen, und vorzugsweise
- ein Ventil (17), das am Ausgang des Hauptzylinders (2) vorhanden ist.

4. Kreis (1) nach Anspruch 1, 2 oder 3, **dadurch gekennzeichnet, dass** die Kammer (16) einen Unterdrucksensor (31) aufweist.

5. Kreis (1) nach Anspruch 3 oder 4, **dadurch gekennzeichnet, dass** das Magnetventil (15) folgendes aufweist:
- zwei Öffnungen (26.1 und 26.2), die das Durchfließen der Hydraulikflüssigkeit (10) zwischen der Kammer (16) und der Bremsvorrichtung (4) ermöglichen, und
- zwei Öffnungen (22 und 23), die das Durchfließen der Hydraulikflüssigkeit (10) zwischen dem Hauptzylinder (2) und der Bremsvorrichtung (4) ermöglichen.

6. Verwendung eines Hydraulikkreises (1) zum Bremsen eines Fahrzeugs, die einen Schritt umfasst, bei dem
- ein Bremspedal (6) gedrückt wird,
**dadurch gekennzeichnet, dass** sie einen Schritt umfasst, bei dem
- Mittel (7) zum Füllen des Hydraulikkreises (1) während eines Bremsbeginns in Betrieb genommen werden.

7. Verwendung nach Anspruch 6, **dadurch gekennzeichnet, dass**
- Füllmittel während eines Lösens der Bremse des Fahrzeugs gefüllt werden.

8. Verwendung nach Anspruch 6 oder 7, **dadurch gekennzeichnet, dass**
- Füllmittel während einer Bremsung des Fahrzeugs gefüllt werden.

9. Verwendung nach einem der Ansprüche 6 bis 8, **dadurch gekennzeichnet, dass**
- Füllmittel während eines Stillstands oder einer Fortbewegung des Fahrzeugs gefüllt werden.
